(19) Europäisches Patentamt
European Patent Office
Office européen des brevets

(11) Numéro de publication : **0 430 769 B1**

(12) # FASCICULE DE BREVET EUROPEEN

(45) Date de publication du fascicule du brevet : **13.07.94 Bulletin 94/28**

(51) Int. Cl.[5] : **B29C 33/68,** C09J 7/02, B32B 17/10

(21) Numéro de dépôt : **90403297.6**

(22) Date de dépôt : **22.11.90**

(54) **Application de films polyester composites antiadhérents en tant que support pour la formation d'au moins une couche de polyuréthane utilisable dans les vitrages de sécurité.**

(30) Priorité : **23.11.89 FR 8915392**
**23.11.89 FR 8915393**

(43) Date de publication de la demande : **05.06.91 Bulletin 91/23**

(45) Mention de la délivrance du brevet : **13.07.94 Bulletin 94/28**

(84) Etats contractants désignés : **AT BE CH DE ES FR GB IT LI LU NL SE**

(56) Documents cités :
**EP-A- 0 260 203**
**EP-A- 0 275 801**
**FR-A- 1 207 646**
**FR-A- 2 546 810**
**JAPANESE PATENT GAZETTE, semaine Y47, 9 janvier 1978, section Ch, classe A94, page 4, accession no. 83635Y/47, Derwent Publications Ltd, Londres, GB; & JP-A-52 121 063 (TEIJIN) 12-10-1977**

(56) Documents cités :
**JAPANESE PATENT GAZETTE, semaine Y36, 17 octobre 1977, section Ch, classe A14, page 4, accession no. 63542Y/36, Derwent Publicatons Ltd, Londres, GB; & JP-A-52 087 482 (TEIJIN) 21-07-1977**

(73) Titulaire : **SAINT-GOBAIN VITRAGE INTERNATIONAL**
**"Les Miroirs"**
**18, avenue d'Alsace**
**F-92400 Courbevoie (FR)**

(72) Inventeur : **Corsi, Philippe**
**La Duchère,**
**336 C Balmont-Ouest**
**F-69009 Lyon (FR)**
Inventeur : **Traversier, Sylviane**
**41, Chemin du Bois Roux**
**F-69300 Caluire (FR)**

(74) Mandataire : **Muller, René et al**
**SAINT-GOBAIN RECHERCHE**
**39, quai Lucien Lefranc-BP 135**
**F-93303 Aubervilliers Cédex (FR)**



Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention a pour objet l'utilisation de nouveaux films polyester composites antiadhérents comme supports temporaires pour la fabrication de films polymères et en particulier pour la fabrication d'au moins une couche de polyuréthane de haute qualité optique, apte à être utilisée dans un vitrage de sécurité.

On sait que des feuilles ou films en matière plastique répondant à des exigences particulières quant à leurs propriétés physiques (résistance à la rayure, transparence, état de surface, aptitude à l'autocicatrisation des rayures, résistance au déchirement notamment) sont utilisées pour la fabrication de vitrages feuilletés dits asymétriques comportant un support monolithique ou feuilleté en verre et/ou en matière plastique, et ladite feuille de matière plastique. Ces vitrages peuvent être utilisés en tant que vitrages bâtiment, en tant que vitrages pour véhicules à moteur, en tant que verres de lunettes de sécurité, etc... Ainsi, dans les brevets français 2 187 719, 2 251 608 et européen 0 132 198 par exemple, on a proposé de mettre en place sur la feuille de verre destinée à être orientée vers l'intérieure de l'habitacle du véhicule, une couche d'un polyuréthane réticulé élastique encore désignée par couche de polyuréthane thermodurcissable ou couche ayant des propriétés de surface, présentant d'excellentes propriétés d'antilacération et d'autocicatrisation ou aptitude à faire disparaître les éraflures accidentelles. La couche de polyuréthane peut être utilisée seule ou en association avec une autre couche ayant des propriétés d'adhésion et/ou d'absorbeur d'énergie, en particulier une couche de polyuréthane thermoplastique ou une couche de polyuréthane obtenue par coulée réactive ou pulvérisation réactive d'un mélange de composants réactionnels comme décrit dans la publication de brevet européen 0 132 198 déjà cité.

Ces couches de polyuréthane doivent présenter une bonne qualité optique et en particulier doivent être exemptes de défauts de surface. Par bonne qualité optique, on entend selon l'invention la qualité optique nécessaire à l'utilisation de ces couches dans un vitrage de véhicule de transport.

On a déjà proposé de fabriquer ces couches par coulée de la masse liquide comportant les précurseurs du polyuréthane, sur un support souple tendu, en matière plastique, délivré en continu à partir de bobines au fur et à mesure de la coulée. Lorsque la couche de polyuréthane thermodurcissable est formée elle peut être immédiatement séparée du support temporaire en matière plastique ou, de préférence, elle peut être enroulée avec ledit support qui joue alors un rôle de film protecteur jusqu'à son utilisation finale.

Lorsque la feuille de polyuréthane comporte une couche thermodurcissable et une couche ayant des propriétés d'adhésion et/ou d'absorbeur d'énergie (désignée encore par la suite dans la description par couche AE) les précurseurs de ces couches sont coulés successivement dans un ordre indifférent, de sorte que le support temporaire peut être en contact soit avec la couche AE soit avec la couche thermodurcissable.

La matière plastique formant le support temporaire doit répondre à diverses exigences relatives à son état de surface, à son inertie chimique vis-à-vis des précurseurs du polyuréthane, à son élasticité, à sa bobinabilité et à son aptitude à se séparer aisément de la feuille polyuréthane sous l'effet d'une traction, tout en conservant une bonne adhérence en l'absence de traction. Les films polyester qui remplissent un certain nombre de ces exigences, ont été proposés comme supports temporaires de feuilles de polyuréthane composites ou non, par exemple dans les publications de brevets français 2 480 669 et 2 546 810 ce dernier représentant l'état de la technique le plus proche. Cependant les films polyester ne réalisent pas un excellent compromis entre une adhérence suffisante à la feuille de polyuréthane et une aptitude à la séparation aisée sous l'effet d'une traction exercée sur le film support. La demanderesse s'est donc proposé comme objectif l'utilisation d'un nouveau film polyester composite en tant que support temporaire de feuilles de polyuréthane pouvant en être séparé aisément sous l'effet d'une traction, sans dommage pour la surface du film polyuréthane, c'est-à-dire sans arrachement de cette surface et/ou sans dépôt sur cette surface de matière arrachée au film support temporaire.

Plus spécifiquement la présente invention a pour objet l'utilisation d'un film polyester composite antiadhérent en tant que support de formation d'au moins une couche de polyuréthane de haute qualité optique apte à être utilisée dans la fabrication des vitrages de sécurité, par apport sur ledit support d'une masse liquide. Ce film est constitué par un film support en polyester orienté semi-cristallin comportant, sur au moins sa face destinée à recevoir la masse liquide, un revêtement comprenant un polymère fluoré et une quantité efficace d'un polyester dissipable dans l'eau dérivé d'au moins un acide aromatique dicarboxylique et d'au moins un diol et comportant une pluralité de groupes sulfonyloxy de formule générale :

$$\text{(I)} \qquad (SO_3)_nM$$

dans laquelle :

- n est égal à 1 ou 2
- M représente un atome d'hydrogène, un métal alcalin ou alcalino-terreux, un cation ammonium, un cation ammonium quaternaire.

Par polyester dissipable dans l'eau on désigne, aux fins de la présente invention, des polyesters solubles

dans l'eau ou des polyesters formant dans l'eau des dispersions stables.

Les polyesters employés pour l'obtention du support des films composites utilisés selon l'invention sont ceux auxquels on fait appel habituellement pour l'obtention de films semi-cristallins bi-orientés. Il s'agit de polyesters linéaires filmogènes, cristallisables par orientation et obtenus de façon usuelle à partir d'un ou plusieurs acides aromatiques dicarboxyliques ou leurs dérivés (esters d'alcools aliphatiques inférieurs, halogénures par exemple) et d'un ou plusieurs glycols aliphatiques. Comme exemple de diacides aromatiques, on peut citer les acides phtalique, téréphtalique, isophtalique, naphtalène-dicarboxylique-2,5; naphtalène-dicarboxylique-2,6. Ces acides peuvent être associés à une quantité mineure d'un ou plusieurs acides dicarboxyliques aliphatiques tels que les acides adipiques, azelaïque, hexahydrotéréphtalique. Comme exemples non limitatifs de diols aliphatiques, on peut citer l'ethylèneglycol ; le propanediol-1,3 ; le butanediol-1,4. Ces diols peuvent être associés à une quantité mineure d'un ou plusieurs diols aliphatiques plus condensés en carbone (néopentylglycol par exemple) ou cycloaliphatiques (cyclohexanediméthanol). Préférentiellement, les polyesters filmogènes cristallisables sont des polytéré phtalates ou des polynaphtalènedicarboxylates d'alkylènediols et, en particulier, le polytéréphtalate d'éthylèneglycol (PET) ou de butanediol-1,4 ou des copolyesters comportant au moins 80 % en moles de motifs téréphtalate ou naphtalènedicarboxylates d'alkylèneglycols. Avantageusement, le polyester est un polytéréphtalate d'éthylèneglycol dont la viscosité intrinsèque mesurée à 25°C dans l'o-chlorophénol est comprise entre 0,6 et 0,75 dl/g.

Les films polyester supports peuvent être eux-mêmes simples ou composites. Ainsi on peut faire appel a un film polyester coextrudé dont une couche est chargé pour communiquer à ladite couche une rugosité suffisante pour assurer la machinabilité de l'ensemble et dont l'autre couche est non chargée ou comporte des charges dont la granulométrie est choisie pour ne pas entraîner de défaut de surface du revêtement anti-adhérent. On peut encore faire appel à des films polyester composites constitués par un film polyester orienté semi-cristallin comportant sur au moins une de ses faces un revêtement primaire d'adhérence déposé par enduction ou par coextrusion tels que ceux décrits dans les demandes de brevets européens n° 267 856 ; 275 801; 260 203 ; 272 993.

Les charges présentes dans les films polyester supports peuvent avoir été introduites lors de la polycondensation ou dans le polymère par les procédés usuels, ou bien elles peuvent résulter de la précipitation de résidus catalytiques sous l'influence d'additifs introduits lors de la polycondensation. La nature de ces charges n'est pas critique ; il peut s'agir de composés minéraux (oxydes ou sels des éléments des groupes II, III et IV de la classification périodique).

A titre illustratif on peut citer les silices, les silico aluminates, le carbonate de calcium, l'oxyde de titane, l'oxyde de magnésium, l'alumine, le sulfate de barium, le polystyrène de préférence réticulé par du divinylbenzène, les polymères thermotropes (polyester en particulier).

La quantité de charge et le diamètre moyen des particules sont choisis de façon à conférer au film polyester support des propriétés de surface (rugosité et coefficients de frottement) suffisantes pour lui assurer une bonne machinabilité, sans pour autant provoquer l'apparition de défauts de surface sur le revêtement andiadhérent (B) par effet report.

En général, le diamètre moyen des particules est inférieur à 3 $\mu$m ; il est de préférence compris entre 0,02 et 2 $\mu$m. La quantité de charge est inférieure ou égale à 1 % du poids du polyester et se trouve préférentiellement comprise dans un intervalle de 0,01 à 0,1 %.

Les films supports sont obtenus par les procédés usuels de filmature qui comportent notamment l'extrusion d'un film polyester amorphe cristallisable, la trempe puis l'étirage, le thermofixation et le bobinage du film orienté semi-cristallin.

L'épaisseur des films polyesters (A) supports peut varier entre 20 et 200 $\mu$m et de préférence entre 30 et 150 $\mu$m.

La couche antiadhérente est obtenue par dépôt sur au moins une des faces du film support d'une composition aqueuse, émulsion ou suspension, comprenant essentiellement un polymère fluoré ou avantageusement un mélange de :

a) un polymère fluoré ;

b) un polyester dissipable dans l'eau à groupes sulfonyloxy.

Les polymères fluorés qui conviennent pour la mise en oeuvre de l'invention peuvent être notamment les polymères et copolymères du fluorure de vinylidène, du trifluorochloroéthylène, du tétrafluoroéthylène, de l'hexafluoropropylène entre eux ou avec des monomères non fluorés (éthylène par exemple). le polyfluorure de vinylidène (PVDF) convient tout particulièrement bien. Ces polymères fluorés peuvent être utilisés sous forme de poudres ou sous forme d'émulsions ou de dispersions aqueuses, par exemple telles que celles obtenues par polymérisation en émulsion ou en suspension du ou des monomères. La teneur en extrait sec des émulsions ou dispersions de polymère fluoré n'est pas critique.

Les polyesters à groupes sulfonyloxy dissipables dans l'eau associés au polymère fluoré, sont des produits

connus. Un premier groupe de polyesters dissipables dans l'eau sont ceux décrits notamment dans les brevets français n° 1 401 581 et n° 1 602 002 et la demande de brevet européen n° 129 674 ; aux fins de la présente invention on peut avoir recours aux polyesters à groupes sulfonyloxy décrits dans ces brevets. Plus spécifiquement, les polyesters solubles ou dispersables dans l'eau sont obtenus par polycondensation d'un ou plusieur diols aliphatiques dicarboxyliques avec au moins un ou plusieurs diols aliphatiques et au moins un composé difonctionnel comportant au moins un groupe sulfonyloxy ; par la suite, pour la commodité de l'exposé, l'expression "groupe sulfonyloxy" désignera aussi bien les groupes hydroxysulfonyles que les sels alcalins, alcalino-terreux ou d'ammonium qui en dérivent.

Parmi les acides aromatiques dicarboxyliques utilisables pour préparer les polyesters dissipables dans l'eau on peut citer, à titre d'exemples non limitatifs : les acides téréphtalique, isophtalique, phtalique, naphtalènedicarboxylique-1,4, oxydibenzoïque-4,4'la bis(hydroxycarbonyl-4 phényl) sulfone, la di-hydroxycarbonyl-4,4' benzophénone. Ces acides peuvent être utilisés seuls ou en mélanges. Parmi les acides précités on fait appel, de préférence, aux acides téréphtalique et isophtalique seuls ou en combinaisons avec les autres acides cités. Les mélanges d'acide téréphtalique avec un ou plusieurs autres acides dicarboxyliques aromatiques et en particulier avec l'acide isophtalique conviennent tout particulièrement bien à l'obtention des polyesters sulfonés dissipables dans l'eau. Dans ce cas la quantité d'acide téréphtalique exprimée en moles peut varier entre 20 et 99 % du nombre total de moles de diacides non sulfonés et de préférence entre 30 et 95 %.

Pour la préparation des copolyesters dissipables des acides dicarboxyiques aliphatiques comportant de 3 à 15 atomes de carbone peuvent être associés aux diacides aromatiques. Plus particulièrement tout ou partie de l'acide aromatique utilisé conjointement à l'acide téréphtalique (par exemple l'acide isophtalique) peut être remplacé par des acides aliphatiques tels que les acides adipique, subérique, sébacique, succinique, dodécanedioïque.

Pour la préparation des polyesters sulfonés dissipables dans l'eau les acides dicarboxyliques peuvent être remplacés, lors de la polycondensation, par leur dérivés utilisés habituellement dans ce type de réaction : anhydrides, esters ou chlorures d'acides. On fait appel de préférence aux esters et en particulier aux esters méthyliques.

Comme exemple de diols utilisables pour la préparation des polyesters sulfonés dissipables dans l'eau on peut citer l'éthylèneglycol ; le butanediol-1,4 ; le butanediol-1,3 . Le propanediol-1,3 ; le propanediol-1,2 le diméthyl-2,2 propanediol-1,3 ; le pentanediol-1,5 ; l'hexanediol-1,6 ; le diéthylèneglycol ; le triéthylèneglycol ; le néopentylglycol ; le cyclohexanediméthanol; le tétraéthylène glycol ; les penta-, hexa-, ou décaméthylèneglycol. L'éthylèneglycol et ses oligomères conviennent tout particulièrement bien à la préparation des polyesters sulfonés. On peut les utiliser seuls ou en mélange entre eux et/ou avec d'autres diols. Les mélanges d'éthylèneglycol et de ses oligomères de formule $HO-(CH_2-CH_2-O)_nH$ dans laquelle n est un nombre entier compris entre 2 et 10 sont préférés.

Les groupes sulfonyloxy de formule $-SO_3M$ sont introduits dans le polyester par l'intermédiaire d'un composé difonctionnel, à groupe sulfonyloxy, susceptible de réagir avec les diacides et/ou les diols au cours de la polycondensation. Des exemples de tels monomères sont cités dans le brevet français n° 1 602 002. On fait appel, de préférence, aux sels de métaux alcalins d'acides aromatiques dicarboxyliques à groupes sulfonyloxy tels que ceux des acides sulfotéréphtaliques, sulfoisophtaliques, sulfophtaliques, hydroxysulfonyl-4, naphtalènedicarboxylique-2,7 ou à leurs dérivés et en particulier à leurs esters.

La quantité de composé bifonctionnel à groupe sulfonyloxy présente dans le polyester sulfoné, exprimée en moles pour un total de 100 moles de composés difonctionnel de même nature est de préférence comprise en 2 moles et 30 moles %. En général des quantités de composés difonctionnels sulfonés comprises, entre 5 moles et 15 moles pour un total de 100 moles de composés difonctionnels de même nature conviennent bien. Ainsi, lorsqu'on fait appel a un sel alcalin de l'acide hydroxysulfonyl-5 isophtalique, ce composé peut représenter de 2 moles à 30 moles pour un total de 100 moles de motifs acides dicarboxyliques présents dans le polyester.

Les polyesters dissipables dans l'eau décrits précédemment sont obtenus par les procédés usuels, par exemple par réaction du ou des diols avec un mélange des esters méthyliques de différents acides nécessaires, en présence des catalyseurs usuels de transestérification, puis polycondensation des esters de diols ainsi obtenus. Les quantités de chacun des réactifs sont calculées pour que le rapport du nombre total de groupes hydroxyles alcooliques au nombre total de groupes carboxyliques soit de préférence compris entre 2 et 2,5.

Un deuxième groupe de polyesters dissipables dans l'eau à groupes sulfonyloxy est constitué par des polyesters tels que ceux décrits précédemment modifiés par greffage d'au moins un monomère de nature acrylique et éventuellement d'au moins un autre monomère à insaturation éthylénique. De tels polyesters modifiés et leur procédé d'obtention ont été décrits dans la demande de brevet européen 0 260 203.

Les monomères acryliques auxquels on fait appel pour la préparation des polymères modifiés peuvent être représentés par la formule générale :

$$\begin{array}{c} R \\ | \\ CH_2=C-Y \end{array} \qquad (II)$$

dans laquelle :

- R représente un atome d'hydrogène ou un groupe alkyle inférieur, éventuellement substitué par un groupe hydroxyle ;
- Y représente un groupe fonctionnel hydroxycarbonyle alkoxycarbonyle de formule $-COOR_1$ dans lequel $R_1$ est un radical alkyle comportant de 1 à 20 atomes de carbone, linéaire ou ramifié (éventuellement substitué par un reste hydroxyle); nitrile ; amide de formule $-CON(R_2,R_3)$ dans laquelle $R_2$ et $R_3$, identiques ou différents représentent un atome d'hydrogène ou un reste alkyle linéaire ou ramifié, comportant de 1 à 20 atomes de carbone.

Par radical alkyle inférieur, on désigne des radicaux alkyles comportant de 1 à 4 atomes de carbone.

Comme exemples spécifiques de radicaux $R_1$, $R_2$ et $R_3$, on peut citer les radicaux méthyle, éthyle, n-propyle, isopropyle, n-butyle, isobutyle, tertiobutyle, n-pentyle, n-hexyle, éthyl-2 hexyle, décyles, dodécyles, octadécyles. Comme exemple de radicaux hydroxyalkyles $R_1$, on peut citer les radicaux hydroxyméthyle, hydroxy-2 éthyle, hydroxy-3 propyle, hydroxy-4 butyle.

Dans la formule (II), R représente de préférence un atome d'hydrogène ou des radicaux méthyle ou hydroxyméthyle.

Parmi les dérivés acryliques de formule (I) auxquels on peut faire appel pour la préparation des polymères modifiés, on peut citer à titre non limitatif : l'acide acrylique, l'acide méthacrylique, l'acrylonitrile, le méthacrylonitrile, l'acrylamide, la méthacrylamide, la N-méthylacrylamide, les acrylates et méthacrylates de méthyle, d'éthyle, de n-propyle, d'isopropyle, de n-butyle, d'isobutyle, d'éthyl-2 hexyle, de stéaryle. Ces monomères peuvent être utilisés seuls ou en mélanges de deux ou plus de deux dérivés acryliques. Comme exemple d'association de dérivés acryliques, on peut citer les mélanges : méthacrylate de méthyle/acide acrylique et/ou méthacrylique, méthacrylate de méthyle/acide acrylique ou méthacrylique/acrylate d'éthyle ; méthacrylate de méthyle/acrylate d'éthyle/acrylamide ou méthacrylamide ; acrylamide/méthacry lamide ; acrylate de butyle/acide acrylique ; méthacrylate de butyle/acrylate d'éthyle.

Les composés acryliques peuvent encore être associés à une quantité mineure d'un ou plusieurs monomères éthylèniques tels que l'acétate de vinyle, le chlorure de vinylidène, le styrène, le méthylstyrène, les acides crotonique, itaconique, fumarique ou maléïque, les sels alcalins ou alcalino-terreux d'acides sulfoniques éthyléniques tels que les acides vinylsulfoniques, allylsulfonique, méthallylsulfonique, styrène-sulfonique. La quantité de monomère éthylènique non acrylique est calculée de façon à ce que dans le copolymère obtenu le nombre de motifs récurrents de ce monomère non acrylique exprimé en moles pour 100 moles de monomère acrylique soit de préférence inférieur ou égal à 20 % et plus préférentiellement encore à 10 %. Des quantités de motifs éthyléniques représentant de 0,1 à 5 % en moles conviennent bien.

On peut, sans sortir du cadre de la présente invention, associer à ces monomères un ou plusieurs monomères susceptibles de provoquer une réticulation de la partie acrylique. A cet effet, on peut faire appel à des monomères polyéthyléniques susceptibles de se réticuler sous l'action des générateurs de radicaux libres au cours de la polymérisation ou bien à des monomères provoquant une réticulation de la partie acrylique par chauffage, par exemple lors du processus d'obtention du film revêtu ou lors d'un traitement thermique ultérieur du film revêtu. Comme exemple, de monomères polyéthyléniques, on peut citer le phtalate de diallyle, le divinylbenzène, les diacrylates ou diméthacrylates de diols tels que le diméthacrylate d'éthylèneglycol. Conviennent comme réticulants sous l'effet de la chaleur des hydroxyalkyl(méth)acrylamides telles que la N-méthylolacrylamide et la N-méthylolméthacrylamide.

La quantité de monomère réticulant exprimée comme précédemment est de préférence inférieure à 5 moles pour 100 moles de monomère acrylique non réticulant. En général, elle est comprise entre 0,1 et 3 moles %.

Pour la préparation des polymères modifiés on opère selon les techniques habituelles de polymérisation radicalaire des monomères à non saturation éthylénique en phase aqueuse. En général, la polymérisation est réalisée par dispersion du ou des monomères acryliques dans un volume convenable d'eau dans lequel on introduit la quantité nécessaire d'un polyester sulfoné dissipable et le cas échéant, un ou plusieurs agents émulsifiants classiques. En effet, bien que le polyester sulfoné puisse jouer lui-même le rôle d'émulsifiant permettant la dispersion du ou des monomères dans l'eau, cela n'exclut pas le recours aux agents tensio-actifs usuels tels que, par exemple, les sels alcalins de sulfates d'alcools à longue chaîne (laurylsulfate de sodium ; laurylsulfate d'éthanolamine) ; les sels alcalins d'acides sulfoniques à longues chaînes ; les émulsifiants non

ioniques tels que les polyoxyéthylènesglycols et leurs dérivés ; les alkylphénols alcoxylés, éventuellement sulfatés. La polymérisation est initiée à l'aide des générateurs de radicaux libres habituels tels que les composés peroxydes : persulfates, eau oxygénée, peroxydes organiques (peroxydes de lauroyle, de benzoyle, hydroperoxyde de t-butyle) ; les composés azo (azodiisobutyronitrile) ; les systèmes redox associant un composé peroxydique, de préférence soluble dans l'eau et un réducteur : sels ferreux (sulfate), sulfites ou bisulfites alcalins.

D'autres adjuvants usuels de polymérisation peuvent être présents dans le milieu réactionnel. Ainsi, on peut opérer en présence d'un agent limiteur de chaîne usuel tel que les mercaptans (dodécylmercaptan, tétradécylmercaptan), de façon à régler le poids moléculaire du copolymère obtenu en fonction des propriétés désirées pour le revêtement.

La température à laquelle est conduite la polymérisation peut varier dans de larges limites. En général, une température comprise entre 10 et 100°C et de préférence entre 20 et 80°C convient bien.

L'étude du produit résultant de la polymérisation d'au moins un monomère acrylique tel que défini ci-avant, en présence d'un polyester dissipable, a permis de constater que le polyester est lié chimiquement au polymère acrylique. Sans que l'invention soit en quoi que ce soit limitée à un mécanisme réactionnel particulier, il semble que le polyester et le(s) monomère(s) acrylique(s) réagissent pendant la polymérisation avec formation d'un copolymère greffé.

La concentration du polyester dissipable et du ou des monomère(s) polymérisable(s) dans la phase aqueuse de polymérisation n'est pas critique et peut varier dans de larges limites. Cette concentration est choisie en fonction du taux de matières solides désiré pour l'émulsion finale et du taux de polymérisation du ou des monomère(s) dans les conditions de polymérisation.

Le produit aqueux obtenu après polymérisation peut être utilisé directement pour l'obtention des films composites selon l'invention. Il peut également faire l'objet de traitements divers. Ainsi, on peut à la fin de la polymérisation procéder à l'élimination des monomères non transformés par les moyens usuels. Lorsque l'un ou plusieurs des composants de la réaction comporte des fonctions acides libres, ces dernières peuvent être neutralisées par addition d'une base minérale ou organique ; on fait appel de préférence à une base alcaline (soude, potasse), à un hydroxyde d'ammonium quaternaire ou à l'ammoniaque. Il peut s'agir des fonctions acide sulfonique du polyester dissipable et/ou des fonctions acide carboxylique du (co) polymère acrylique. On peut encore ajouter à l'émulsion obtenue des adjuvants tels des stabilisants, ou des agents antistatiques. Selon une variante, on peut encore introduire dans l'émulsion obtenue des agents de réticulation externes connus des (co)polymères acryliques.

La nature des agents réticulants externes dépend de la nature du ou des monomères acryliques. Parmi les agents réticulants préférés, on peut citer, les résines formophénoliques, les résines amines-formol telles que les produits de condensation mélamine/formol, urée/formol, triazine/formol. La quantité de réticulant est alors en général comprise entre 0,1 et 15 % en poids et de préférence entre 0,5 et 12 % en poids par rapport au poids total du polyester dissipable et du (co)polymère acrylique présents dans l'émulsion.

Le produit résultant de la polymérisation présente diverses formes, selon la proportion et la nature des réactifs mis en jeu et/ou les conditions de la polymérisation, et/ou le traitement final appliqué au produit obtenu. Ainsi, les produits résultant de la polymérisation d'un monomère acrylique non acide avec une quantité notable d'un acide polymérisable ( acides (meth) acryliques, acide crotonique ), par exemple au moins 5 % en moles du total des monomères polymérisables peut se présenter sous forme d'une émulsion vraie lorsque les groupes acides carboxyliques sont libres ou sous forme de solutions aqueuses plus ou moins visqueuses lorsque les groupes carboxyliques sont neutralisés au moyen d'une des bases citées auparavant et en particulier au moyen d'une base alcaline. La viscosité des dispersions ou solutions de polymères modifiés n'est pas critique et peut être réglée à volonté en fonction des besoins par modification de leur teneur en extrait sec.

La composition aqueuse d'enduction peut être obtenue par dispersion d'une quantité adéquate d'un polymère fluoré dans une quantité adéquate d'une solution ou dispersion aqueuse de polyester dissipable modifié ou non ou par mélange de quantités convenables d'une émulsion ou dispersion aqueuse de polymère fluoré et d'une émulsion ou d'une dispersion aqueuse de polymère dissipable. La teneur pondérale en extrait sec de la composition aqueuse d'enduction n'est pas critique et peut varier dans de larges limites. Pour des raisons pratiques il est préférable que la teneur en extrait sec de la composition d'enduction soit comprise entre 5 % et 35 % en poids.

La teneur pondérale de la composition d'enduction en polyester dissipable modifié ou non, exprimée par rapport au polymère fluoré est calculée pour conférer au film composite des propriétés physico-chimiques de surface qui le rendent apte à une utilisation comme support temporaire de films ou feuilles plastiques et tout particulièrement de films ou feuilles de polyuréthannes thermoplastiques ou réticulés. En définitive cette teneur est choisie pour assurer à la fois une adhérence suffisante à ces feuilles ou films en l'absence de toute traction et une séparation aisée sous traction modérée. Cette teneur dite efficace dépend dans une certaine

mesure des propriétés physico-chimiques de surface des films ou feuilles qui devront être supportées. Elle est également calculée pour assurer au revêtement une surface lisse. En effet, on a constaté que la présence d'une quantité adéquate de polyester dissipable permet l'obtention d'un film exempt d'arborescences qui se développent à la surface du revêtement de polymère fluoré en l'absence de polyester dissipable.

En général la quantité de polyester dissipable modifié ou non représente de 5 % à 50 % en poids du polymère fluoré et de préférence de 10 % à 45 % en poids.

Outre le polymère fluoré avantageusement associé avec le polyester dissipable, la composition d'enduction peut contenir tout additif nécessaire à sa stabilité chimique et/ou physique ; ainsi elle peut contenir des antioxydants, des anti-UV, des agents tensioactifs ioniques ou non ioniques.

Le dépôt du revêtement sur le film polyester support peut être réalisé par les différentes techniques connues de l'homme de l'art. Ainsi, la composition aqueuse de polymères peut être déposée par gravité à partir d'une couleuse à fente, ou par passage du film dans la composition ou encore au moyen de rouleaux de transfert. L'épaisseur de la couche est contrôlée par tout moyen approprié. Le dépôt du revêtement peut avoir lieu soit avant tout étirage du film (enduction en ligne), soit après étirage avant ou après thermofixation (enduction en reprise). On préfère toutefois procéder à l'enduction du film polyester avant l'étirage ou entre deux étirages.

Préalablement à l'enduction, le film polyester peut être soumis à un traitement de surface choisi parmi ceux habituellement utilisés et, plus particulièrement, parmi les traitements physiques. Ainsi, la face destinée à recevoir le revêtement peut être soumise à des décharges électriques (traitement corona) ou à des radiations ionisantes. Cependant, de tels traitements ne sont pas indispensables.

La quantité de composition aqueuse d'enduction déposée sur le film dépend d'une part de sa teneur en extrait sec et, d'autre part, de l'épaisseur désirée pour le revêtement du film fini, c'est-à-dire après étirage et thermofixation lorsque l'enduction a lieu en ligne. Cette quantité dépend également du moment de l'enduction ; on doit évidemment tenir compte de la variation d'épaisseur du revêtement avant et après étirage, lorsque l'enduction est réalisée avant étirage. L'épaisseur du revêtement fini peut varier dans de larges limites.

En général une épaisseur du revêtement de polymère comprise entre 0,05 μm et 0,5 μm convient bien. De préférence, elle est comprise dans un intervalle de 0,1 à 0,3 μm. La quantité d'extrait sec déposée sur le film polyester pour obtenir de telles épaisseurs est comprise entre 0,04 et 0,4 g/$m^2$.

Après enduction, le film polyester est traité à chaud pour éliminer l'eau contenue dans le revêtement et, le cas échéant, pour provoquer la réticulation du polyester dissipable. Dans le cas de l'enduction en ligne, il n'est en général pas nécessaire de procéder à un traitement thermique ; le séchage et éventuellement la réticulation sont réalisés au cours de l'étirage et de la thermofixation. On ne sortirait cependant pas du cadre de la présente invention en procédant, dans ce cas, préalablement à l'étirage et à la thermofixation, à un traitement thermique suffisant pour provoquer la coalescence du latex et le séchage.

Le revêtement de polymères peut être appliqué sur une seule des faces ou sur les deux faces du film polyester support.

Pour fabriquer selon l'invention, la ou les couches de polyuréthane, sur le film polyester support, celui-ci doit être tendu longitudinalement et latéralement pour former un support plan horizontal.

A cette fin, on peut avantageusement utiliser les moyens du dispositif décrit dans les publications de brevets européens 0 038 760 ou 0 131 483 déjà cités.

Le dispositif utilisé comprend un distributeur du film polyester, des moyens exerçant sur ce ruban des efforts de traction longitudinalement et transversalement de façon à le tendre et le rendre le plus parfaitement plan et horizontal possible, des moyens pour entraîner ce ruban dans un mouvement d'avance continu, des moyens pour déposer en au moins un endroit la masse liquide, apte à former la couche de polyuréthane sur le ruban, des moyens de chauffage permettant la solidification de la masse liquide par polymérisation des composants et/ou évaporation des produits volatils, des moyens supportant horizontalement le ruban sur sa largeur utile, au moins à l'emplacement où la masse liquide est apportée.

Suivant une réalisation du dispositif, les moyens exerçant des efforts de traction sur le film polyester support sont essentiellement un rouleau tracteur situé en bout de ligne, associé à au moins un rouleau résistant situé dans la partie amont de la ligne, et des roulettes dites roulettes de bords, qui, des deux côtés du film polyester, au-dessus et au-dessous dudit film polyester, exercent sur lui des forces à composantes latérales vers l'extérieur. Les roulettes de bord peuvent avoir une action réglable ; leur angle d'inclinaison par rapport à la direction d'avance du film polyester pouvant varier, de même que leurs efforts de pincement.

Dans une variante, le film polyester support peut-être tendu latéralement par des pinces qui se déplacent simultanément et parallèlement avec le ruban.

En bout de ligne de coulée, des moyens permettent l'enroulement de la feuille formée.

Dans une réalisation du dispositif, les moyens supportant horizontalement le film polyester sur sa largeur utile, c'est-à-dire la largeur recouverte par la masse liquide au moins aux emplacements où la masse liquide est apportée, peuvent être des rouleaux disposés aux emplacements indiqués sous le film polyester, et le cas

échéant, à d'autres emplacements du dispositif formant la ligne de coulée.

Dans une variante, les moyens supportant horizontalement le film polyester de la ou des coulées aux emplacements et éventuellements en d'autres endroits, sont avantageusement des plaques métalliques ou en verre supportées elles-mêmes par des organes adéquats, par exemple des rouleaux, ou directement par un bâti lui-même.

Cette variante est avantageuse, car les plaques peuvent en même temps servir à répartir le chauffage du support par zones, par conduction, en étant elles-mêmes chauffées par des résistances électriques par exemple.

La ligne de coulée comprend en outre lorsque le film polyester support n'est pas utilisé comme intercalaire de stockage, des moyens de séparation de la feuille dudit support.

Pour éviter des défauts optiques de la feuille dus à la présence de corps étrangers, la ligne de coulée peut encore comprendre des moyens empêchant les grains de poussière et autres particules de se déposer sur la feuille fabriquée et éventuellement sur le support, surtout lorsque celui-ci est utilisé comme intercalaire de stockage, et également des moyens de nettoyage pour éliminer ces grains de poussière éventuellement déjà déposés.

Les moyens pour éviter le dépôt de particules peuvent être des écrans physiques. Ainsi, on peut placer l'ensemble de la ligne de coulée, ou des parties de cette ligne, telles des zones de coulée, et de solidification dans une enceinte contenant de l'air filtré et dépoussiéré.

Les moyens pour éviter le dépôt de particules peuvent être aussi des barres électrostatiques qui ionisent l'atmosphère autour de la feuille.

Les moyens pour nettoyer la feuille peuvent être des brosses, des lames agissant comme des râcles, des éléments d'essuyage, associés le cas échéant à des organes d'aspiration.

Dans une variante, les moyens supportant le film polyester support, à l'exclusion généralement du ou des emplacements pour la coulée, sont des fils métalliques tendus entre deux barres horizontales disposées latéralement de part et d'autre de la ligne de coulée. Ces fils peuvent être placés à distances déterminées les uns des autres, ces distances étant généralement plus petites à proximité aval de la coulée, là où la matière coulée est encore très fluide.

Un des avantages de l'utilisation de fils métalliques provient du fait que les frottements de la feuille support de coulée avec ces fils sont pratiquement supprimés et il s'ensuit que l'électricité statique créée notamment par ces frottements est fortement réduite.

D'autre part, ces fils conducteurs sont susceptibles d'éliminer ces charges électriques.

Un autre avantage de l'utilisation de fils métalliques réside dans le fait que l'on supprime ainsi les grains de poussière qui peuvent se loger entre les feuilles support rigides et le support souple tendu, et qui sont susceptibles d'endommager le support souple ou encore de provoquer des défauts de surface sur les couches coulées.

Dans une variante du dispositif utilisé pour fabriquer au moins une couche de polyuréthane de haute qualité optique sur un film polyester support on utilise pour le maintien en position tendu, deux supports s'étendant sur toute la longueur utile de la ligne de coulée, placés le long des bords latéraux du film polyester support, qui associés à des moyens de tension permettent de tendre le film polyester support comme une peau de tambour. De tels moyens sont décrits dans la publication de brevet européen 0 131 483 déjà cité.

On décrit maintenant la préparation d'exemples de films polyester support utilisé dans le cadre de l'invention pour la fabrication de couches de polyuréthane.

Support 1 :

On extrude à raison de 96 kg/h un polytéréphtalate d'éthylèneglycol ayant un indice de viscosité de 580 et contenant 0,4 % en poids de carbonate de calcium, à 275°C par une filière à fente de 450 mm de largeur. La nappe de PET est mise en contact avec un tambour de refroidissement dont la surface est maintenue à 35°C, puis étirée dans le sens longitudinal à 75°C (vitesse d'étirage 20 m/mn, taux d'étirage 3,2). On dépose alors sur le film monoétiré 2 g/m$^2$ d'une dispersion aqueuse de PVDF à 35 % en poids de PVDF au moyen d'un dispositif d'enduction comportant successivement : un rouleau de mise à niveau, un rouleau d'embarrage, un rouleau enducteur tournant à 13 m/mn et une barre de lissage tournant à 7 m/mn. Le film enduit est ensuite soumis à un étirage transversal à 95-110°C (taux 3,7) puis thermofixé à 225-235°C. On obtient de cette façon un film de 36 μm d'épaisseur dont une face comporte un revêtement de PVDF (0,2 g d'extrait sec par m$^2$).

Ce film a été soumis à la mesure du coefficient de frottement de la face enduite sur la face selon la méthode de DAVENPORT d'après la norme ASTM D 1894-78. Les résultats ont été les suivants :

coefficient de frottement statique $\mu s$ : 0,38

coefficient de frottement dynamique $\mu d$ : 0,33

Le même film non enduit présente les coefficients suivants :

μs : 0,56

μd : 0,44

Support 2

On prépare un film composite antiadhérent par un procédé d'enduction en ligne analogue à celui décrit pour le support 1 par dépôt de 2 g/$m^2$ d'une dispersion aqueuse de PVDF à 35 % en poids d'extrait sec sur l'une des faces d'un film monoétiré obtenu par coextrusion d'un PET contenant 0,03 % en poids de silice et d'un copolyester à motif sulfo-5 isophtalate et ayant subi un traitement corona. L'enduction est réalisée au moyen d'un dispositif du type hélio-report comportant un rouleau gravé ayant 120 alvéoles de 40 μm de profondeur par $cm^2$.

Le film enduit est ensuite soumis à un étirage transversal puis thermofixé comme à l'exemple 1, on obtient de cette façon un film enduit de 50 μm d'épaisseur, comportant:

- une couche interne A chargée par de la silice épaisseur : 48 μm
- sur chaque face de la couche A une couche B de copolyester sulfoné (épaisseur 1 μm)
- sur une des couches B de copolyester sulfoné une couche C de revêtement PVDF de 0,2 g/$m^2$.

Ce film enduit présente les coefficients de frottement suivants :

A) Face enduite sur face enduite :

μs : 0,65

μd : 0,47

B) Face enduite sur face non enduite :

μs : 0,80

μd : 0,45

Support 3 :

1 - Préparation d'une composition aqueuse d'enduction

A une dispersion aqueuse de PVDF à 35 % en poids d'extrait sec on ajoute sous agitation une quantité d'une dispersion aqueuse contenant 20 % en poids d'un copolyester sulfoné, vendu sous la marque commerciale GEROL PS 20 par la Société RHONE-POULENC CHIMIE suffisante pour obtenir une dispersion aqueuse dans laquelle le PVDF représente 31 % en poids de la composition et le copolyester sulfoné 2,2 % en poids (extrait sec total 33,2 % en poids). Ce copolyester comporte pour 100 motifs acide dicarboxylique : 52 motifs isophtalates, 36 Motifs téréphtalates et 12 motifs sulfo-5 isophtalate ; sa teneur en diéthylène glycol est de 13 % en poids. Il présente un poids moléculaire moyen en nombre de 17 000 et un indice de viscosité de 556 msuré à 25°C sur une solution de 1 g de polymère dans 100 ml d'un mélange phénol/O-chlorophénol dans un rapport pondéral 50/50.

2 - Préparation d'un film enduit

On extrude à raison de 96 kg/h un polytéraphtalate d'éthylèneglycol ayant un indice de viscosité de 580 et contenant 0,4 % en poids de carbonate de calcium, à 275°C par une filière à fente de 450 mm de largeur. La nappe de PET est mise en contact avec un tambour de refroidissement dont la surface est maintenue à 35°C, puis étirée dans le sens longitudinal à 75°C (vitessse d'étirage 20 m/mm ; taux d'étirage 3,2). On dépose alors sur le film monoétiré 2 g/m2 de la dispersion aqueuse préparée précédemment, au moyen d'un dispositif d'enduction comportant successivement : un rouleau de mise à niveau, un rouleau d'embarrage, un rouleau enducteur tournant à 13 m/mn et une barre de lissage tournant à 7 m/mn. Le film enduit est ensuite soumis à un étirage tranversal à 95-110°C (taux 3,7) puis thermofixé à 225-235°C. On obtient de cette façon un film de 36 μm d'épaisseur dont une face comporte un revêtement de PVDF (0,2 g d'extrait sec par m2).

Sur le film enduit ainsi obtenu on a déterminé par la méthode de DAVENPORT (norme ASTM D 1894-78) les coefficients de frottement statique (μs) et dynamique (μd) de la face enduite sur la face enduite. Les résultats sont les suivants :

μs : 0,36

μd : 0,33

Le film non enduit présente les coefficients de frottement suivants :

μs : 0,56

μd : 0,44

Support 4 -

On prépare un film composite antiadhérent par enduction en ligne, entre l'étirage longitudinal et l'étirage transversal, d'un film composite coextrudé constitué par une couche A principale de PET contenant 0,03 % en poids de silice portant sur chacune de ses faces une couche d'un primaire d'adhérence à base d'un copolyester à motifs sulfo-5 isophtalates. Préalablement à l'enduction le film monoétiré est soumis à un traitement corona. L'enduction est réalisée au moyen d'un dispositif du type hélio-report dont le rouleau gravé présente 120 alvéoles de 40 µm de profondeur par cm2.

La composition d'enduction a été obtenue par addition sous agitation d'une quantité suffisante d'une dispersion aqueuse de GEROL PS 20 à 20 % en poids à 1000 g d'une suspension auqueuse de PVDF à 35 % en poids. La composition obtenue contient 28,8 % d'extrait sec (20 % de PVDF et 8,8 % de copolyester sulfoné). La quantité de composition aqueuse déposée est de 2 g/m2 .

Le film enduit d'une épaisseur de 50 µm, comporte 0,2 g/m2 d'extrait sec. Il présente les coefficients de frottement suivants :

| | face end./face end. | face end./face non end. |
|---|---|---|
| µs | 0,72 | 0,90 |
| µd | 0,61 | 0,66 |

Support 5 -

1 - Préparation d'un copolyester sulfoné greffé

On prépare un latex à 45 % en poids d'extrait sec d'un copolyester sulfoné gréffé en utilisant le procédé de polymérisation décrit à l'exemple 1 de la demande de brevet européen N° 0 260 203. A cet effet, un mélange de méthacrylate de méthyle, d'acrylate d'éthyle, d'acide méthacrylique, d'acide crotonique et d'acétate de vinyle, pris dans les rapports pondéraux de l'exemple 1 de la demande européenne précitée est polymérisé en présence d'une quantité du copolymère sulfoné décrit pour le support 3 de la présente demande, calculée pour que ledit copolyester sulfoné constitue 40 % en poids de l'extrait sec du latex obtenu.

2 - Préparation d'une composition d'enduction

A 1000 g de la dispersion aqueuse de PVDF décrite pour le support 3 on ajoute sous agitation la quantité suffisante de latex de copolymère greffé à 45 % en poids d'extrait sec pour obtenir une dispersion aqueuse dans laquelle le PVDF représente 30 % en poids et le copolymère greffé 3 % en poids du total de la composition (soit un extrait sec total de 33 %).

3 - Préparation d'un film composite enduit

On prépare un film composite antiadhérent par enduction en ligne du film support polyester décrit pour le support 4 à l'aide de la composition décrite précédemment, déposée à raison de 2 g/m2 pour obtenir un film enduit de 50 µm comportant 0,2 g/m2 de revêtement antiadhérent.

Le film ainsi obtenu présente les coefficients de frottement suivants :

| | face end./face end. | face end./face non end. |
|---|---|---|
| µs | 0,74 | 0,79 |
| µd | 0,55 | 0,61 |

Supports 6 et 7 -

En opérant comme pour le support 5 on a préparé des films enduits F1 et F2 par enduction du film support de l'exemple 4 à l'aide de dispersions aqueuses contenant respectivement 26 % et 20 % en poids de PVDF et 5,5 et 9 % en poids du copolymère greffé décrit pour le support 5 (soit respectivement 31,5 et 29 % en poids d'extrait sec). Les films obtenus présentent les coefficients de frottement suivants :

| | face end. /face end. | | face end. /face non end. | |
|---|---|---|---|---|
| | µs | µd | µs | µd |
| F1 | 0,71 | 0,59 | 0,62 | 0,56 |
| F2 | 0,70 | 0,59 | 0,73 | 0,53 |

Support 8 -

On prépare un film enduit par enduction en reprise d'un film biétiré obtenu par coextrusion d'un polytéréphtalate d'éthylèneglycol contenant 0,08 % de silice et d'un copolyester sulfoné à motifs sulfo-5 isophta lique ; le film coextrudé d'une épaisseur totale de 50 µm comporte une couche de copolyester sulfoné de 0,4 µm sur chaque face. La face destinée à recevoir l'enduit a subi un traitement corona. La composition aqueuse d'enduction qui comporte 5 % en poids de PVDF et 2,2 % en poids de copolyester sulfoné décrit pour le support 3 (soit 7,2 g d'extrait sec total), est déposée sur le film composite au moyen d'un système d'enduction de type héliogravure pourvu d'un rouleau gravé en céramique comportant 50 lignes de 66 µm de profondeur par cm2. La vitesse de défilement du film est de 30 m/mn. Le film enduit passe ensuite dans 3 zones de séchage portées respectivement à 90, 85 et 60°C puis sur un rouleau refroidisseur.

Le film obtenu qui comporte 0,3 g/m2 de revêtement antiadhérent présente les coefficients de frottement suivants :

| | Face enduite/Face enduite |
|---|---|
| µs | 0,4 |
| µd | 0,3 |

Le film non enduit a pour coefficients de frottement:
µs : 0,5 et µd : 0,4)

Supports 9 à 11 -

Le latex aqueux utilisé a été obtenu par polymérisation selon le procédé décrit à l'exemple 1 de la demande européenne n° 0 260 203 d'acétate de vinyle (5 % en poids), de méthacrylate de méthyle (44,5 % en poids), d'acrylate d'éthyle (36,5 % en poids) d'acide méthacrylique (11 % en poids) et de N-méthylolméthacrylamide (3 % en poids) en présence du copolyester sulfoné décrit pour le support 3 (40 % en poids du total des monomères). Le latex ainsi préparé a un taux d'extrait sec de 42 % en poids et une viscosité à 15 % de 34 000 CPS.

On a préparé des compositions d'enduction par addition à 1000 g de dispersion aqueuse de PVDF à 35 % d'extrait sec d'une quantité adéquate du latex aqueux décrit précédemment pour obtenir les compositions d'enduction C1, C2 et C3 qui ont les compositions suivantes :

| | PVDF % EN POIDS | COPOLYESTER SULFONE GREFFE % EN POIDS |
|---|---|---|
| C1 | 7,5 | 0,75 |
| C2 | 20 | 8,8 |
| C3 | 5 | 2,2 |

En opérant comme à l'exemple 8 on a préparé des films F 1, F 2 et F 3 sur le film coextrudé de l'exemple 8 par dépôt de respectivement 0,45 g/m2 ; 1,7 g/m2 et 0,4 g/m2 d'extrait sec sur chaque film.

Les films ainsi obtenus présentent les coefficients de frottement face enduite sur face enduite suivants :

| | µs | µd |
|---|---|---|
| F1 | 0,4 | 0,3 |
| F2 | 0,4 | 0,3 |
| F3 | 0,4 | 0,3 |

Les supports décrits précédemment sont utilisés en tant que supports pour la fabrication des couches de polyuréthane comme illustré dans les exemples suivants :

Les couches de polyuréthane qui peuvent être fabriquées selon l'invention sont celles décrites par exemple dans les publications de brevet français 2 398 606, et européens 0 132 198, 0 133 090, 0 190 517.

Lorsqu'on veut fabriquer une feuille à deux couches, utilisable dans un vitrage de sécurité tel que décrit dans la publication de brevet européen 0 132 198, on fabrique tout d'abord une première couche qui peut être soit la couche adhésive ayant des propriétés d'absorbeur d'énergie (couche AE), soit la couche de polyuréthane thermodurcissable. Et sur cette première couche, on forme la deuxième couche.

On peut ainsi fabriquer tout d'abord une couche de polyuréthane thermodurcissable par coulée du mélange des composants sur le support de coulée. Après polymérisation des monomères et formation d'une couche thermodurcissable d'épaisseur pouvant varier entre 0,1 et 0,8 mm par exemple, on coule le mélange réactionnel des composants de la couche ayant des propriétés d'absorbeur d'énergie.

On peut encore procéder d'une façon inverse, c'est-à-dire en formant d'abord la couche ayant des propriétés d'absorbeur d'énergie (couche AE).

On peut bien entendu fabriquer une feuille à plus de deux couches, notamment une feuille à trois couches, à savoir, une première couche de polyuréthane ayant des propriétés de surface encore désignée par couche autocicatrisable ou couche de polyuréthane thermodurcissable, une seconde couche de polyuréthane ayant des propriétés d'absorbeur d'énergie et une troisième couche thermoplastique ayant des propriétés d'adhésion. Dans une variante, on peut fabriquer d'abord la couche adhésive, puis la couche ayant des propriétés d'absorbeur d'énergie, puis la couche ayant des propriétés de surface.

EXEMPLES 1 A 11 :

Sur les supports 1 à 11 décrits précédemment, on coule un mélange homogène de :

- 1000 g d'un polyéther d'un poids moléculaire d'environ 450 obtenu par condensation d'oxyde de 1,2-propylène avec du 2,2-bis (hydroxyméthyl)- 1-butanol et ayant une teneur en radicaux hydroxyles libres d'environ 10,5 à 12 %, contenant 1 % en poids d'un stabilisant, 0,05 % en poids d'un catalyseur à savoir du dilaurate de dibutylétain et 0,1 % en poids d'un agent nappant,
- 1020 g d'un biuret de 1,6-hexanediisocyanate ayant une teneur en radicaux isocyanates libres d'environ 23,2 %.

On utilise une tête de coulée telle que celle décrite dans la publication de brevet français 2 347 170. On forme une couche uniforme qui après polymérisation sous l'effet de la chaleur, par exemple environ 15 minutes à 120°C, présente une épaisseur d'environ 0,19 mm et des propriétés d'autocicatrisation.

Pour fabriquer la couche ayant des propriétés d'absorbeur d'énergie, on prépare au préalable le composant polyol en mélangeant un polytétraméthylèneglycol de masse moléculaire 1000 avec du butanediol-1,4 et un polycaprolactonetriol, les proportions des trois constituants étant telles que le polytétraméthylèneglycol apporte 0,35 équivalent en groupes hydroxyles alors que le butanediol-1,4 en apporte 0,55 et le triol 0,10.

Au composant polyol, on incorpore un stabilisant à raison de 0,5 % en poids de la masse totale du composant polyol et du composant isocyanate, un agent nappant à raison de 0,05 % en poids calculé de la même façon et un catalyseur à savoir du dilaurate de dibutylétain à raison de 0,02 % en poids calculé de la même façon que précédemment.

Le composant isocyanate utilisé est du 3-isocyanatométhyl- 3,5,5triméthylcyclohexylisocyanate (IPDI) présentant des fonctions urées obtenues par hydrolyse partielle de l'IPDI et ayant une teneur en groupements NCO d'environ 31,5 % en poids.

Les composants sont pris en quantités telles que le rapport NCO/OH est de 1.

Après dégazage sous vide des composants, le mélange porté à environ 40°C est coulé à l'aide d'une tête de coulée comme celle décrite dans la publication de brevet français 2 347 170, sur la couche de polyuréthane autocicatrisable formée précédemment. On forme ainsi une couche d'environ 0,60 mm d'épaisseur qui est soumis à un cycle de polymérisation consistant en 25 minutes de chauffage à 120°C environ.

La feuille à deux couches est retirée du support en polyester et elle peut être manipulée aisément, stockée ou utilisée juste après pour la fabrication des vitrages feuilletés.

La feuille présente la qualité optique nécessaire à son utilisation dans un vitrage de sécurité.

<u>EXEMPLES 12 A 22</u> :

On opère comme dans les exemples 1 à 11, sauf que pour former la couche de polyuréthane ayant des propriétés d'autocicatrisation, on coule un mélange homogène de :

- 942 g d'une polycaprolactone trifonctionnelle ayant une teneur en radicaux OH libres de 9,3 % en poids, contenant 0,015 % en poids de dilaurate de dibutylétain, 0,1 % en poids d'un ester fluoroalkylé comme agent d'étalement et 1 % en poids d'un agent de protection contre les U.V. ,
- 1000 g d'un triisocyanurate à base de 1,6-hexaméthylènediisocyanate, ayant une teneur en radicaux NCO libres de 21,5 % en poids.

La couche est polymérisée sous l'effet de la chaleur, par exemple 15 minutes à 120°C.

On fabrique ensuite la couche ayant des propriétés d'absorbeur d'énergie.

La feuille a deux couches est retirée du support. Elle présente la qualité optique nécessaire à une utilisation dans un vitrage de sécurité.

## Revendications

**1.** Utilisation d'un film polyester anti-adhérent en tant que support pour la formation de feuilles de matière plastique comprenant au moins une couche de polyuréthane de bonne qualité optique par apport d'au moins une masse liquide sur ledit support plan horizontal mobile, tendu, le film polyester anti-adhérent étant constitué par un film support en polyester orienté semi-cristallin comportant, sur au moins sa face destinée à recevoir la masse liquide, un revêtement comprenant :

a) un polymère fluoré

b) une quantité efficace d'un polyester dissipable dans l'eau dérivé d'au moins un acide aromatique dicarboxylique et d'au moins un diol et comportant une pluralité de groupes sulfonyloxy de formule générale :

$$(I) \qquad (SO_3)_nM$$

dans laquelle :

- n est égal à 1 ou 2
- M représente un atome d'hydrogène, un métal alcalin ou alcalino-terreux, un cation ammonium, un cation ammonium quaternaire.

**2.** Utilisation du film selon la revendication 1, le film polyester orienté support étant constitué par un polymère comportant au moins 80 % en moles de motifs dérivés d'au moins un acide aromatique dicarboxylique et d'éthylène glycol.

3. Utilisation du film selon la revendication 1 ou 2, le film polyester orienté support étant constitué par un polymère comportant au moins 80 % en moles de motifs téréphtalate d'éthylèneglycol ou naphtalène-dicarboxylate d'éthylèneglycol.

4. Utilisation du film selon une des revendications 1 à 3, le film polyester orienté support ayant une épaisseur comprise entre 20 et 200 µm.

5. Utilisation du film selon une des revendications 1 à 4, le film polyester support comportant sur la face recevant le revêtement antiadhérent un revêtement primaire d'adhérence.

6. Utilisation du film selon la revendication 5, le revêtement primaire d'adhérence étant constitué par un copolyester sulfoné.

7. Utilisation du film selon une des revendications 1 à 6, la face du film support recevant le revêtement antiadhérent ayant été soumise à un traitement corona.

8. Utilisation du film selon une des revendications 1 à 7, le polyester dissipable étant un copolyester comportant une pluralité de motifs dérivés d'au moins deux acides dicarboxyliques dont l'un comporte au moins un groupe sulfonyloxy dans sa molécule et une pluralité de motifs dérivés d'au moins un diol aliphatique.

9. Utilisation du film selon la revendication 8, le nombre de motifs dérivés d'un acide dicarboxylique à groupe sulfonyloxy pour un total de 100 motifs dérivés d'acides dicarboxyliques étant de 2 à 30.

10. Utilisation du film selon une des revendications 1 à 9, le polyester dissipable étant un copolyester comportant une pluralité de motifs dérivés d'au moins un acide dicarboxylique non sulfoné pris dans le groupe des acides téréphtalique, isophtalique et phtalique.

11. Utilisation du film selon une des revendications 1 à 8, le polyester dissipable étant un copolyester comportant une pluralité de motifs dérivés des acides téré et isophtaliques.

12. Utilisation du film selon la revendication 9, le polyester dissipable étant un copolyester dans lequel le nombre des motifs téréphtalate représente de 20 à 99 % du nombre total des motifs téréphtalate et isophtlate.

13. Utilisation du film selon une des revendications 1 à 10, le polyester dissipable dans l'eau comportant une pluralité de motifs dérivés de l'acide sulfo-5 isophtalique.

14. Utilisation du film selon une des revendications 1 à 11, le polyester dissipable comportant une pluralité de motifs dérivés d'au moins un diol aliphatique pris dans le groupe de l'éthylèneglycol et de ses oligomères de formule $HO-(OH_2-CH_2-O-)_n H$ dans laquelle n est un nombre entier de 2 à 10.

15. Utilisation du film selon une des revendications 1 à 14, le polyester dissipable ayant été modifié par greffage d'au moins un monomère acrylique.

16. Utilisation du film selon la revendication 15, le monomère de nature acrylique répondant à la formule générale :

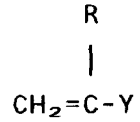

(II)

dans laquelle :

- R représente un atome d'hydrogène ou un groupe alkyle inférieur, éventuellement substitué par un groupe hydroxyle ;
- Y représente un groupe fonctionnel hydroxycarbonyle alkoxycarbonyle de formule $-COOR_1$ dans lequel $R_1$ est un radical alkyle comportant de 1 à 20 atomes de carbone, linéaire ou ramifié (éventuellement substitué par un reste hydroxyle); nitrile ; amide de formule $-CON(R_2,R_3)$ dans laquelle $R_2$ et $R_3$, identiques ou différents représentent un atome d'hydrogène ou un reste alkyle linéaire ou ramifié, comportant de 1 à 20 atomes de carbone.

17. Utilisation du film selon une des revendications 15 ou 16, le monomère acrylique étant pris dans le groupe formé par les acrylate et méthacrylate de méthyle, les acrylate et méthacrylate d'éthyle, les acides acrylique et méthacrylique, les acrylamide et méthacrylamide.

18. Utilisation du film selon une des revendications 15 à 17, une quantité mineure d'un ou plusieurs monomères éthyléniques non acryliques étant associée au monomère acrylique.

19. Utilisation du film selon une des revendications 15 à 18, avec association d'au moins un monomère réticulant aux monomères acryliques de formule (II).

20. Utilisation du film selon la revendication 19, la quantité de monomère réticulant représentant jusqu'à 5 % en moles du monomère acrylique de formule (II).

21. Utilisation du film selon la revendication 19, le monomère réticulant étant un monomère polyéthylénique.

22. Utilisation du film selon la revendication 19, le monomère réticulant étant une hydroxyalkyl(méth) acrylamide.

23. Utilisation du film selon une des revendications 15 à 22, le polyester dissipable modifié contenant de 0,1 à 15 % en poids d'au moins un agent réticulant externe pris dans le groupe formé par les résines formophénoliques et les résines amines-formol.

24. Utilisation du film selon une des revendications 1 à 23, le polymère fluoré étant pris dans le groupe formé par les polymères et les copolymères du fluorure de vinylidène, du trifluorochloroéthylène, du tétrafluorochloroéthylène, de l'hexafluoropropylène entre eux et/ou avec des monomères non fluorés.

25. Utilisation du film selon une des revendications 1 à 24, la quantité de polymère dissipable dans l'eau, modifié ou non, présentant dans le revêtement représente de 5 % en poids à 50 % en poids du polymère fluoré.

26. Utilisation du film selon une des revendications 1 à 25, la quantité de revêtement exprimée en g d'extrait sec par $m^2$ de film support orienté étant comprise entre 0,1 et 0,4 $g/m^2$.

27. Utilisation du film selon une des revendications 1 à 26, pour fabriquer une couche de polyuréthane thermodurcissable par apport du mélange réactionnel des composants du polyuréthane sur le film support.

28. Utilisation du film selon une des revendications 1 à 27, pour fabriquer une couche de polyuréthane ayant des propriétés d'absorbeur d'énergie par apport d'un mélange réactionnel des composants du polyuréthane sur le film support.

29. Utilisation du film selon une des revendications 1 à 28 pour fabriquer une feuille comprenant deux couches de polyuréthane, une couche de polyuréthane thermodurcissable et une couche de polyuréthane ayant des propriétés d'absorbeur d'énergie.

30. Utilisation du film selon une des revendications 1 à 28, pour fabriquer une feuille comprenant une couche de polyuréthane présentant des propriétés de surface autocicatrisable, une couche de polyuréthane ayant des propriétés d'absorbeur d'énergie, et une couche de polyuréthane thermoplastique ayant des propriétés d'adhésion.

**Patentansprüche**

1. Verwendung einer haftungsverhindernden Polyesterfolie als Trägermaterial für die Herstellung von Kunststoffolien, die wenigstens eine Polyurethanschicht hoher optischer Qualität enthalten, durch Auftrag wenigsten einer flüssigen Masse auf dieses gespannte, bewegliche waagerechte flache Trägermaterial, wobei die haftungsverhindernde Polyesterfolie aus einer Trägerfolie aus gerecktem teilkristallinen Polyester besteht, welche wenigstens auf der Seite, die zur Aufnahme der flüssigen Masse vorgesehen ist, eine Beschichtung enthält, die

a) ein fluoriertes Polymer und

b) eine wirksame Menge eines in Wasser verteilbaren Polyesters umfaßt, der von wenigstens einer aromatischen Dicarbonsäure und wenigstens einem Diol abgeleitet ist und eine Anzahl Sulfonyloxygruppen der allgemeinen Formel

$$(SO_3)_nM \quad (I)$$

trägt, in welcher

n gleich 1 oder 2 ist und

M ein Wasserstoffatom, ein Alkali- oder Erdalkalimetall, ein Ammonium- und ein quartäres Ammoniumkation bedeutet.

2. Verwendung der Folie nach Anspruch 1, wobei die gereckte Polyesterträgerfolie aus einem Polymer besteht, das wenigstens 80 Mol% Grundeinheiten enthält, die von wenigstens einer aromatischen Dicarbonsäure und von Ethylenglykol abgeleitet sind.

3. Verwendung der Folie nach Anspruch 1 oder 2, wobei die gereckte polyesterträgerfolie aus einem Polymer besteht, das wenigstens 80 Mol% Grundeinheiten aus Ethylenglykolterephthalat oder Ethylenglykol-Naphthalindicarboxylat enthält.

4. Verwendung der Folie nach einem der Ansprüche 1 bis 3, wobei die gereckte Polyesterträgerfolie eine Dicke von 20 bis 200 µm aufweist.

5. Verwendung der Folie nach einem der Ansprüche 1 bis 4, wobei die Polyesterträgerfolie auf der die Antihaftbeschichtung aufnehmenden Seite eine primäre Haftbeschichtung umfaßt.

6. Verwendung der Folie nach Anspruch 5, wobei die primäre Haftbeschichtung aus einem sulfonierten Copolyester besteht.

7. Verwendung der Folie nach einem der Ansprüche 1 bis 6, wobei die Seite der Trägerfolie, welche die Antihaftbeschichtung erhält, einer Koronabehandlung unterzogen worden ist.

8. Verwendung der Folie nach einem der Ansprüche 1 bis 7, wobei der verteilbare Polyester ein Copolyester ist, der eine Anzahl von Grundeinheiten, die von wenigstens zwei Dicarbonsäuren abgeleitet sind, deren eine in ihrem Molekül wenigstens eine Sulfonyloxygruppe enthält, und eine Anzahl von Grundeinheiten, die von wenigstens einem aliphatischen Diol abgeleitet sind, umfaßt.

9. Verwendung der Folie nach Anspruch 8, wobei die Anzahl der von einer Dicarbonsäure mit Sulfonyloxygruppe abgeleiteten Grundeinheiten auf insgesamt 100 von Dicarbonsäuren abgeleitete Grundeinheiten 2 bis 30 beträgt.

10. Verwendung der Folie nach einem der Ansprüche 1 bis 9, wobei der verteilbare Polyester ein Copolyester ist, der eine Anzahl von Grundeinheiten enthält, die von wenigstens einer unsulfonierten Dicarbonsäure aus der Gruppe der Terephthal-, Isophthal- und Phthalsäure abgeleitet sind.

11. Verwendung der Folie nach einem der Ansprüche 1 bis 8, wobei der verteilbare Polyester ein Copolyester ist, der eine Anzahl von Grundeinheiten enthält, die von der Terephthal- und Isophthalsäure abgeleitet sind.

12. Verwendung der Folie nach Anspruch 9, wobei der verteilbare Polyester ein Copolyester ist, dessen Anzahl der Terephthalatgrundeinheiten 20 bis 99 % der Gesamtzahl der Terephthalat- und Isophthalatgrundeinheiten beträgt.

13. Verwendung der Folie nach einem der Ansprüche 1 bis 10, wobei der in Wasser verteilbare Polyester eine Anzahl von Grundeinheiten enthält, die von 5-Sulfoisophthalsäure abge-leitet sind.

14. Verwendung der Folie nach einem der Ansprüche 1 bis 11, wobei der verteilbare Polyester eine Anzahl von Grundein-heiten enthält, die von wenigstens einem aliphatischen Diol abgeleitet sind, das aus der Gruppe ausgewählt ist, die aus Ethylenglykol und dessen Oligomeren der Formel $HO\text{-}(CH_2\text{-}CH_2\text{-}O\text{-})_nH$, in der n eine ganze Zahl von 2 bis 10 bedeutet, besteht.

**15.** Verwendung der Folie nach einem der Ansprüche 1 bis 14, wobei der verteilbare Polyester durch Aufpfropfen wenigtens eines Acrylmonomers modifiziert ist.

**16.** Verwendung der Folie nach Anspruch 15, wobei das acrylische Monomer der allgemeinen Formel

$$\begin{matrix} & R & \\ CH_2= & C & -Y \end{matrix} \quad (II)$$

entspricht, in der
R ein Wasserstoffatom oder einen gegebenenfalls mit einer Hydroxylgruppe substituierten niederen Alkylrest und
Y eine funktionelle Hydroxycarbonylalkoxycarbonylgruppe der Formel $-COOR^1$ bedeutet, in welcher $R^1$ einen geradkettigen oder verzweigten (gegebenenfalls mit einem Hydroxylrest substituierten), 1 bis 20 Kohlenstoffatome enthaltenden Alkylrest, einen Nitrilrest und ein Amid der Formel $-CON(R^2,R^3)$ bedeutet, in dem $R^2$ und $R^3$ gleich oder verschieden sind und ein Wasserstoffatom oder einen geradkettigen oder verzweigten, 1 bis 20 Kohlenstoffatome enthaltenden Alkylrest bedeuten.

**17.** Verwendung der Folie nach Anspruch 15 oder 16, wobei das Acrylmonomer aus der Gruppe ausgewählt ist, die aus Methyl-acrylat und Methylmethacrylat, Ethylacrylat und Ethyl-methacrylat, Acryl- und Methacrylsäure und Acrylamid und Methacrylamid besteht.

**18.** Verwendung der Folie nach einem der Ansprüche 15 bis 17, wobei ein geringer Anteil eines oder mehrerer nicht-acrylischer Ethylenmonomere an das Acrylmonomer angelagert ist.

**19.** Verwendung der Folie nach einem der Ansprüche 15 bis 18, wobei wenigstens ein vernetzendes Monomer an die Acryl-monomere der Formel (II) angelagert ist.

**20.** Verwendung der Folie nach Anspruch 19, wobei der Anteil des vernetzenden Monomers bis zu 5 Mol% des Acrylmonomers der Formel (II) beträgt.

**21.** Verwendung der Folie nach Anspruch 19, wobei das vernetzende Monomer ein Polyethylenmonomer ist.

**22.** Verwendung der Folie nach Anspruch 19, wobei das vernetzende Monomer ein Hydroxyalkyl(meth-)acrylamid ist.

**23.** Verwendung der Folie nach einem der Ansprüche 15 bis 22, wobei der verteilbare modifizierte Polyester 0,1 bis 15 Gew.% wenigstens eines äußeren Vernetzungsmittels enthält, das aus der Gruppe ausgewählt ist, die aus den Formaldehyd-Phenol- und Formaldehyd-Aminharzen besteht.

**24.** Verwendung der Folie nach einem der Ansprüche 1 bis 23, wobei das fluorierte Polymer aus der Gruppe ausgewählt ist, die aus den Polymeren und Copolymeren des Vinyliden-fluorids, des Trifluorchlorethylens, des Tetrafluor-ethylens und des Hexafluorpropylens mit sich und/oder mit unfluorierten Monomeren besteht.

**25.** Verwendung der Folie nach einem der Ansprüche 1 bis 24, wobei der Anteil des in Wasser verteilbaren, gegebenenfalls modifizierten Polymers, der in der Beschichtung vorhanden ist, 5 bis 50 Gew.% des fluorierten Polymers ausmacht.

**26.** Verwendung der Folie nach einem der Ansprüche 1 bis 25, wobei der Anteil der Beschichtung, ausgedrückt in g Trok-kensubstanz pro $m^2$ gereckte Trägerfolie, 0,1 bis 0,4 $g/m^2$ beträgt.

**27.** Verwendung der Folie nach einem der Ansprüche 1 bis 26 zur Herstellung einer duroplastischen Polyurethanschicht, indem ein Reaktionsgemisch der Polyurethankomponenten auf die Trägerfolie aufgetragen wird.

**28.** Verwendung der Folie nach einem der Ansprüche 1 bis 27 zur Herstellung einer Polyurethanschicht mit energieabsorbie-renden Eigenschaften, indem das Reaktionsgemisch der Polyurethankomponenten auf die Trägerfolie aufgetragen wird.

29. Verwendung der Folie nach einem der Ansprüche 1 bis 28 zur Herstellung einer Folie, die zwei Polyurethanschichten, nämlich eine duroplastische Polyurethanschicht und eine Polyurethanschicht mit energieabsorbierenden Eigenschaften, umfaßt.

30. Verwendung der Folie nach einem der Ansprüche 1 bis 28 zur Herstellung einer Folie, die eine Polyurethanschicht mit einer Oberfläche, die bei Beschädigung einen selbstheilen-den Effekt aufweist, eine Polyurethanschicht mit energieabsorbierenden Eigenschaften und eine thermoplasti-sche Polyurethanschicht mit Hafteigenschaften umfaßt.

## Claims

1. Use of an anti-adhesive polyester film as support for the form ing of sheets of plastics material comprising at least one film of polyurethane of good optical quality, by the application of at least one liquid mass onto said movable, horizontal, plane support, held tensioned, the anti-adhesive polyester film being constituted of a support film of semicrystalline, orientated polyester comprising, on at least its face intended for receiving the liquid mass, a coating comprising:
   a) a fluorinated polymer,
   b) an effective quantity of a polyester that can be dispersed in water, derived from at least one dicarboxylic aromatic acid and at least one diol and containing a plurality of sulphonyloxy groups having the general formula:

$$(I) \qquad (SO_3)_nM$$

   in which:
   - n is equal to 1 or 2,
   - M represents a hydrogen atom, an alkali or alkaline-earth metal, an ammonium cation, a quaternary ammonium cation.

2. Use of the film according to Claim 1, the orientated polyester support film being constituted of a polymer containing at least 80 mol % of motifs derived from at least one dicarboxylic aromatic acid and ethylene glycol.

3. Use of the film according to Claim 1 or 2, the orientated polyester support film being constituted of a polymer containing at least 80 mol % of ethylene glycol terephthalate or ethylene glycol naphthalene-dicarboxylate motifs.

4. Use of the film according to one of Claims 1 to 3, the orientated polyester support film having a thickness of from 20 to 200 $\mu$m.

5. Use of the film according to one of Claims 1 to 4, the polyester support film comprising, on the face receiving the anti-adhesive coating, a primary adhesive coating.

6. Use of the film according to Claim 5, the primary adhesive coating being constituted of a sulphonated copolyester.

7. Use of the film according to one of Claims 1 to 6, the face of the support film receiving the anti-adhesive coating having been subjected to a corona discharge treatment.

8. Use of the film according to one of Claims 1 to 7, the dispersible polyester being a copolyester containing a plurality of motifs derived from at least two dicarboxylic acids, of which the one comprises at least one sulphonyloxy group in its molecule and a plurality of motifs derived from at least one aliphatic diol.

9. Use of the film according to Claim 8, the number of motifs derived from a dicarboxylic acid having sulphonyloxy groups for a total of 100 motifs derived from dicarboxylic acids being from 2 to 30.

10. Use of the film according to one of Claims 1 to 9, the dispersible polyester being a copolyester containing a plurality of motifs derived from at least one non-sulphonated dicarboxylic acid from the group of the terephthalic, isophthalic and phthalic acids.

11. Use of the film according to one of Claims 1 to 8, the dispersible polyester being a copolyester containing

a plurality of motifs derived from the terephthalic and isophthalic acids.

**12.** Use of the film according to Claim 9, the dispersible polyester being a copolyester, in which the number of terephthalate motifs represents from 20 to 99% of the total number of the terephthalate and isophthalate motifs.

**13.** Use of the film according to one of Claims 1 to 10, the water-dispersible polyester containing a plurality of motifs derived from sulpho-5 isophthalic acid.

**14.** Use of the film according to one of Claims 1 to 11, the dispersible polyester containing a plurality of motifs derived from at least one aliphatic diol chosen from the group comprising ethylene glycol and its oligomers having the formula $HO-(CH_2-CH_2-O-)_n H$, where n is a whole number from 2 to 10.

**15.** Use of the film according to one of Claims 1 to 14, the dispersible polyester having been modified by grafting of at least one acrylic monomer.

**16.** Use of the film according to Claim 15, the monomer of acrylic nature complying with the general formula:

$$CH_2 = \overset{\overset{\displaystyle R}{|}}{C} - Y \qquad (II)$$

in which:
- R represents a hydrogen atom or a lower alkyl group, possibly substituted by a hydroxyl group;
- Y represents an alkoxycarbonyl hydroxycarbonyl functional group having the formula $-COOR_1$, in which $R_1$ is an alkyl radical containing from 1 to 20 carbon atoms, either linear or branched (possibly substituted by a hydroxyl residue); nitrile; amide having the formula $-CON(R_2,R_3)$ in which $R_2$ and $R_3$, either identical or different, represent a hydrogen atom or a linear or branched alkyl residue comprising from 1 to 20 carbon atoms.

**17.** Use of the film according to one of Claims 15 or 16, the acrylic monomer being chosen from the group formed of methyl acrylate and methacrylate,ethyl acrylate and methacrylate, acrylic and methacrylic acid, acrylamide and methacrylamide.

**18.** Use of the film according to one of Claims 15 to 17, a minor quantity of one or more non-acrylic ethylenic monomers being associated with the acrylic monomer.

**19.** Use of the film according to one of Claims 15 to 18, with association of at least one cross-linking monomer with the acrylic monomers of formula (II).

**20.** Use of the film according to Claim 19, the quantity of crosslinking monomer representing up to 5 mol % of the acrylic monomer of formula (II).

**21.** Use of the film according to Claim 19, the cross-linking monomer being a polyethylenic monomer.

**22.** Use of the film according to Claim 19, the cross-linking monomer being a hydroxyalkyl(meth) acrylamide.

**23.** Use of the film according to one of Claims 15 to 22, the modified dispersible polyester containing from 0.1 to 15% by weight of at least one external cross-linking agent chosen from the group formed of the formophenolic resins and the amine-formol resins.

**24.** Use of the film according to one of Claims 1 to 23, the fluorinated polymer being chosen from the group formed of the polymers and copolymers of vinylidene fluoride, of trifluorochloroethylene, of tetrafluorochloroethylene, of hexafluoropropylene, with one another and/or with non-fluorinated monomers.

**25.** Use of the film according to one of Claims 1 to 24, the quantity of water-dispersible polymer, modified or non-modified, present in the coating representing from 5% by weight to 50% by weight of the fluorinated polymer.

**26.** Use of the film according to one of Claims 1 to 25, the quantity of coating expressed in g of dry extract per $m^2$ of orientated support film being 0.1 to 0.4 $g/m^2$.

**27.** Use of the film according to one of Claims 1 to 26 for the production of a film of thermosetting polyurethane by application of the reaction mixture of the components of the polyurethane onto the support film.

**28.** Use of the film according to one of Claims 1 to 27 for the production of a polyurethane film having energy-absorber properties, by application of a reaction mixture of the components of the polyurethane onto the support film.

**29.** Use of the film according to one of Claims 1 to 28 for the production of a sheet comprising two polyurethane films, a film of thermosetting polyurethane and a film of polyurethane having energy-absorber properties.

**30.** Use of the film according to one of Claims 1 to 28 for the production of a sheet comprising a film of polyurethane possessing self-healing surface properties, a film of polyurethane having energy-absorber properties, and a film of thermoplastic polyurethane having adhesion properties.